# EUROPEAN PATENT APPLICATION

(11) **EP 4 350 603 A1**
(43) Date of publication of application: **10.04.2024**
(21) Application number: 23197925.3
(22) Date of filing: 18.09.2023
(51) Int. Cl.: G06T 3/18

(54) **PREDICTIVE PERSPECTIVE CORRECTION**

(30) Priority: 19.09.2022 US 202263407807 P
(71) Applicant: Apple Inc., Cupertino, CA 95014 (US)
(72) Inventor: DAMVELD, Hermannus J., Santa Clara (US); CHENIER, Marc-Andre, St-Hyacinthe (CA); RODIER, Julien Monat, San Francisco (US)
(74) Representative: COPA Copenhagen Patents

(57) **Abstract**

In one implementation, a method of warping an image is performed by a device including an image sensor, a display, one or more processors, and non-transitory memory. The method includes predicting a capture pose of the device in a physical environment at a capture time and a display pose of the device in the physical environment at a display time. The method includes capturing, using the image sensor, an image of the physical environment during a capture time period including the capture time. The method includes generating a warp definition based on the predicted capture pose and the predicted display pose. The method includes warping, using the one or more processors, the image of the physical environment based on the warp definition. The method includes displaying, on the display, the warped image of the physical environment during a display time period including the display time.

## Description

### CROSS-REFERENCE TO RELATED APPLICATIONS

This application claims priority to U.S. Provisional Patent App. No. 63/407,807, filed on September 19, 2022, which is hereby incorporated by reference in its entirety.

### TECHNICAL FIELD

The present disclosure generally relates to systems, methods, and devices for performing perspective correction at predicted perspectives.

### TECHNICAL FIELD

The present disclosure generally relates to systems, methods, and devices for performing perspective correction at predicted perspectives.

### BACKGROUND

In various implementations, an extended reality (XR) environment is presented by a head-mounted device (HMD). Various HMDs include a scene camera that captures an image of the physical environment in which the user is present (e.g., a scene) and a display that displays the image to the user. In some instances, this image or portions thereof can be combined with one or more virtual objects to present the user with an XR experience. In other instances, the HMD can operate in a pass-through mode in which the image or portions thereof are presented to the user without the addition of virtual objects. Ideally, the image of the physical environment presented to the user is substantially similar to what the user would see if the HMD were not present. However, due to the different positions of the eyes, the display, and the camera in space, this may not occur, resulting in impaired distance perception, disorientation, and poor hand-eye coordination.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 is a block diagram of an example operating environment in accordance with some implementations.
Figure 2 illustrates an example scenario related to capturing an image of physical environment and displaying the captured image in accordance with some implementations.
Figure 3 is an overhead perspective view of a physical environment.
Figure 4A illustrates a first view of the physical environment of Figure 3 at a first time as would be seen by a left eye of a user if the user were not wearing an HMD.
Figure 4B illustrates a first image of the physical environment of Figure 3 captured by a left image sensor of the HMD at the first time.
Figure 4C illustrates a second view of the physical environment of Figure 3 at a second time as would be seen by the left eye of the user if the user were not wearing the HMD.
Figure 4D illustrates a second image of the physical environment of Figure 3 captured by the left image sensor of the HMD over a capture time period including the first time.
Figure 4E illustrates a timing diagram of a device in accordance with some implementations.
Figure 5 is a flowchart representation of a method of warping an image in accordance with some implementations.
Figure 6 is a block diagram of an example controller in accordance with some implementations.
Figure 7 is a block diagram of an example electronic device in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### SUMMARY

Various implementations disclosed herein include devices, systems, and method for warping an image. In various implementations, the method is performed by a device including an image sensor, a display, one or more processors, and non-transitory memory. The method includes predicting a capture pose of the device in a physical environment at a capture time and a display pose of the device in the physical environment at a display time. The method includes capturing, using the image sensor, an image of the physical environment during a capture time period including the capture time. The method includes generating a warp definition based on the predicted capture pose and the predicted display pose. The method includes warping, using the one or more processors, the image of the physical environment based on the warp definition. The method includes displaying, on the display, the warped image of the physical environment during a display time period including the display time.

In accordance with some implementations, a device includes one or more processors, a non-transitory memory, and one or more programs; the one or more programs are stored in the non-transitory memory and configured to be executed by the one or more processors. The one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example implementations described herein.

As described above, in an HMD with a display and a scene camera, the image of the physical environment presented to the user on the display may not always reflect what the user would see if the HMD were not present due to the different positions of the eyes, the display, and the camera in space. In various circumstances, this results in poor distance perception, disorientation of the user, and poor hand-eye coordination, e.g., while interacting with the physical environment. Thus, in various implementations, images from the scene camera are transformed such that they appear to have been captured at the location of the user's eyes using a depth map representing, for each pixel of the image, the distance from the camera to the object represented by the pixel.

However, performing such a transformation takes time. In various implementations, performing the transform includes generating a definition of the transform and applying the transform to the image. Thus, when an image captured at a first time is transformed such that it appears to have been captured at the location of the user's eye at the first time, it is displayed at a second time later than the first time. Further, the user may have moved between the first time and the second time. Accordingly, the transformed image is not what the user would see if the HMD were not present, but what the user would have seen at the first time if the HMD were not present. Accordingly, in various implementations, an image captured at a first time is transformed such that it appears to have been captured at a predicted location of the user's eye at the second time at which the transformed image is displayed.

In various implementations, to reduce latency, the definition of the transform is generated prior to the image being captured. Accordingly, in various implementations, a definition of a transform is generated based on a predicted location of the camera at the first time at which the image is captured and a predicted location of the user's eye at the second time at which the transformed image is displayed.

In various implementations, rather than transforming the images such that they appear to have been captured at the location of the user's eyes, the images are partially transformed such that they appear to have been captured at a location closer to the location of the user's eyes than the location of the scene camera in one or more dimensions of a three-dimensional coordinate system of the HMD.

In various implementations, the depth map is altered to reduce artifacts. For example, in various implementations, the depth map is smoothed so as to avoid holes in the transformed image. As another example, in various implementations, the depth map is clamped so as to reduce larger movements of the pixels during the transform. In various implementations, the depth map is made static such that dynamic objects do not contribute to the depth map. For example, in various implementations, the depth map values at locations of a dynamic object are determined by interpolating the depth map using locations surrounding the locations of the dynamic object. In various implementations, the depth map values at locations of a dynamic object are determined based on depth map values determined at a time the dynamic object is not at the location. In various implementations, the depth map is determined using a three-dimensional model of the physical environment without dynamic obj ects.

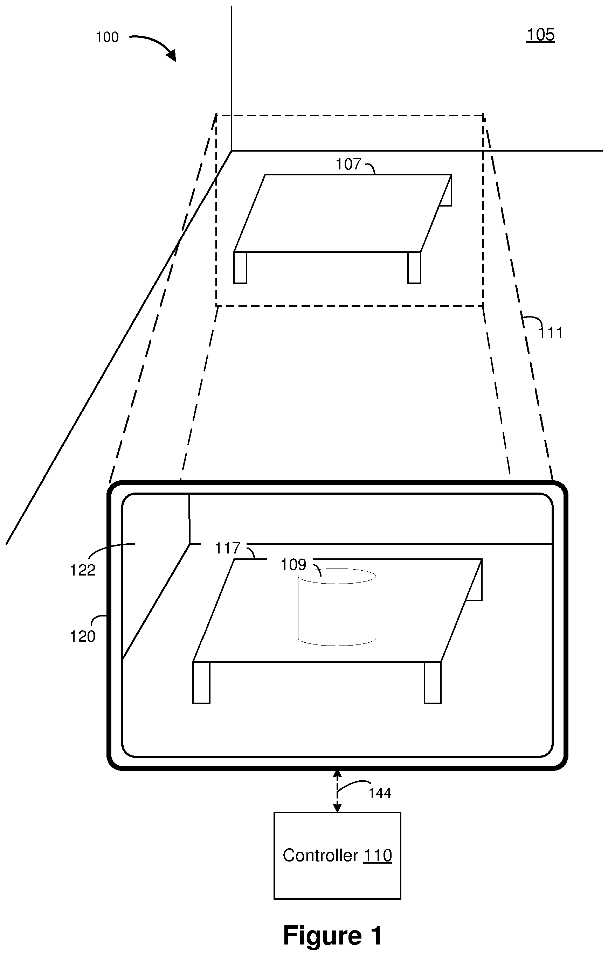

Figure 1 is a block diagram of an example operating environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating environment 100 includes a controller 110 and an electronic device 120.

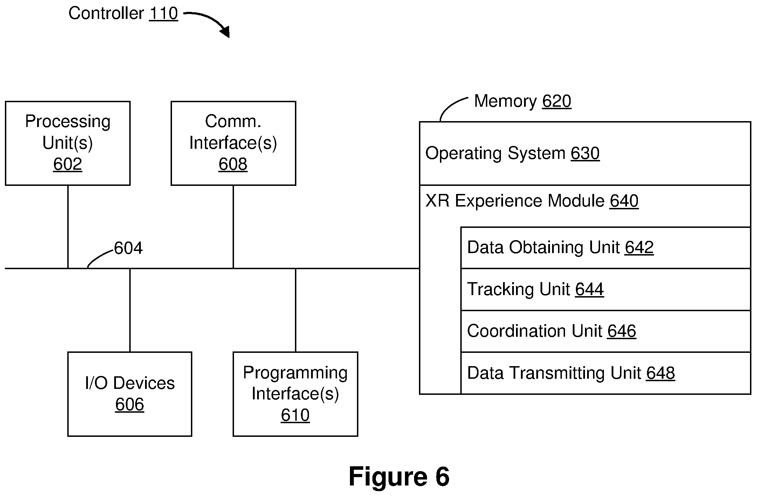

In some implementations, the controller 110 is configured to manage and coordinate an XR experience for the user. In some implementations, the controller 110 includes a suitable combination of software, firmware, and/or hardware. The controller 110 is described in greater detail below with respect to Figure 6. In some implementations, the controller 110 is a computing device that is local or remote relative to the physical environment 105. For example, the controller 110 is a local server located within the physical environment 105. In another example, the controller 110 is a remote server located outside of the physical environment 105 (e.g., a cloud server, central server, etc.). In some implementations, the controller 110 is communicatively coupled with the electronic device 120 via one or more wired or wireless communication channels 144 (e.g., BLUETOOTH, IEEE 802.11x, IEEE 802.16x, IEEE 802.3x, etc.). In another example, the controller 110 is included within the enclosure of the electronic device 120. In some implementations, the functionalities of the controller 110 are provided by and/or combined with the electronic device 120.

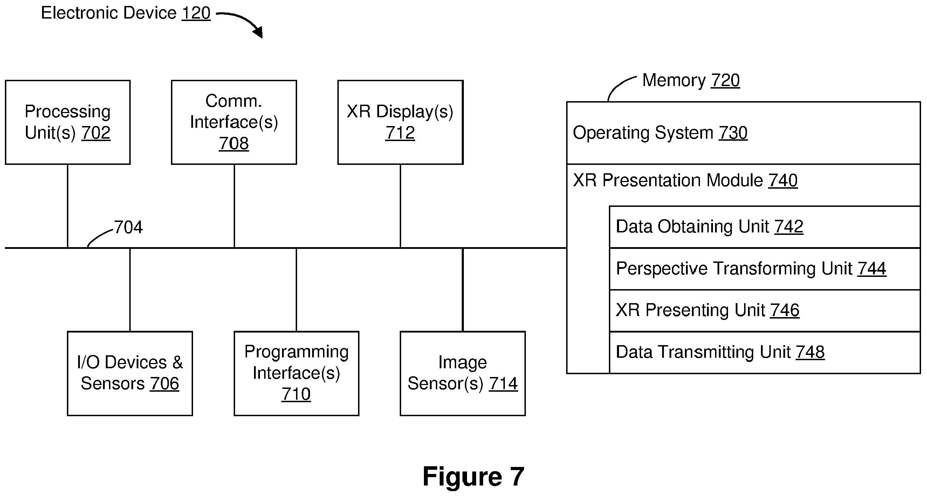

In some implementations, the electronic device 120 is configured to provide the XR experience to the user. In some implementations, the electronic device 120 includes a suitable combination of software, firmware, and/or hardware. According to some implementations, the electronic device 120 presents, via a display 122, XR content to the user while the user is physically present within the physical environment 105 that includes a table 107 within the field-of-view 111 of the electronic device 120. As such, in some implementations, the user holds the electronic device 120 in his/her hand(s). In some implementations, while providing XR content, the electronic device 120 is configured to display an XR object (e.g., an XR cylinder 109) and to enable video pass-through of the physical environment 105 (e.g., including a representation 117 of the table 107) on a display 122. The electronic device 120 is described in greater detail below with respect to Figure 7.

According to some implementations, the electronic device 120 provides an XR experience to the user while the user is virtually and/or physically present within the physical environment 105.

In some implementations, the user wears the electronic device 120 on his/her head. For example, in some implementations, the electronic device includes a head-mounted system (HMS), head-mounted device (HMD), or head-mounted enclosure (HME). As such, the electronic device 120 includes one or more XR displays provided to display the XR content. For example, in various implementations, the electronic device 120 encloses the field-of view of the user. In some implementations, the electronic device 120 is a handheld device (such as a smartphone or tablet) configured to present XR content, and rather than wearing the electronic device 120, the user holds the device with a display directed towards the field-of view of the user and a camera directed towards the physical environment 105. In some implementations, the handheld device can be placed within an enclosure that can be worn on the head of the user. In some implementations, the electronic device 120 is replaced with an XR chamber, enclosure, or room configured to present XR content in which the user does not wear or hold the electronic device 120.

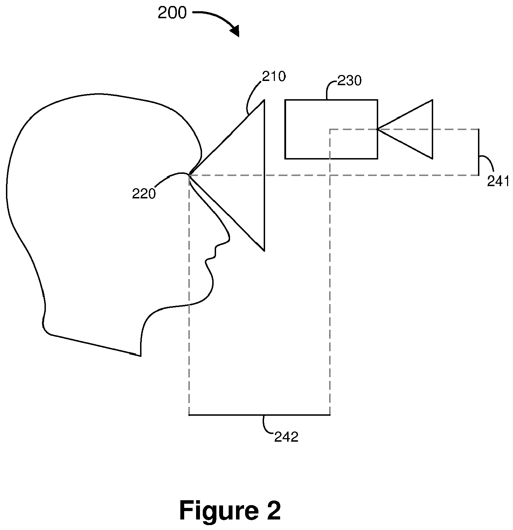

Figure 2 illustrates an example scenario 200 related to capturing an image of an environment and displaying the captured image in accordance with some implementations. A user wears a device (e.g., the electronic device 120 of Figure 1) including a display 210 and an image sensor 230. The image sensor 230 captures an image of a physical environment and the display 210 displays the image of the physical environment to the eyes 220 of the user. The image sensor 230 has a perspective that is offset vertically from the perspective of the user (e.g., where the eyes 220 of the user are located) by a vertical offset 241. Further, the perspective of the image sensor 230 is offset longitudinally from the perspective of the user by a longitudinal offset 242. Further, the perspective of the image sensor 230 is offset laterally from the perspective of the user by a lateral offset (e.g., into or out of the page in Figure 2).

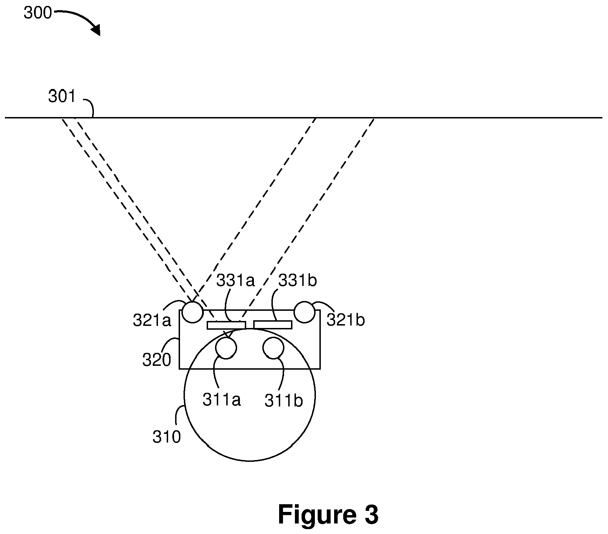

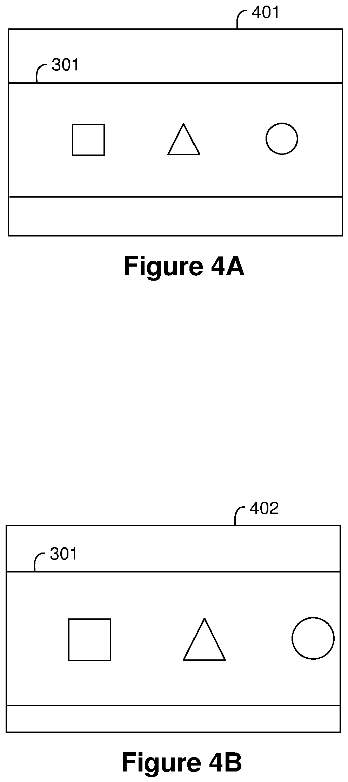

Figure 3 is an overhead perspective view of a physical environment 300. The physical environment 300 includes a structure 301 and a user 310 wearing an HMD 320. The structure 301, as illustrated in the views and images described below with respect to Figures 4A-4D, has, painted thereon, a square, a triangle, and a circle. The user 310 has a left eye 311a at a left eye location providing a left eye perspective. The user 310 has a right eye 311b at a right eye location providing a right eye perspective. The HMD 320 includes a left image sensor 321a at a left image sensor location providing a left image sensor perspective. The HMD 320 includes a right image sensor 321b at a right image sensor location providing a right image sensor perspective. Because the left eye 311a and the left image sensor 321a are at different locations, they each provide different perspectives of the physical environment 300. The HMD 320 further includes a left eye display 331a within a field-of view of the left eye 311a and a right eye display 331b within a field-of view of the right eye 311b.

Figure 4A illustrates a first view 401 of the physical environment 300 at a first time as would be seen by the left eye 311a if the user 310 were not wearing the HMD 320. In the first view 401, the square, the triangle, and the circle can be seen on the structure 301.

Figure 4B illustrates a first image 402 of the physical environment 300 captured by the left image sensor 321a at the first time. In the first image 402, like the first view 401, the square, the triangle, and the circle can be seen on the structure 301. However, because the left image sensor 321a is to the left of the left eye 311a, the triangle and the circle on the structure 301 in the first image 402 are at locations to the right of the corresponding locations of the triangle and the circle in the first view 401. Further, because the left image sensor 321a is closer to the structure 301 than the left eye 311a, the square, the triangle, and the circle are larger in the first image 402 than in the first view 401.

In various implementations, the HMD 320 transforms the first image 402 to make it appear as though it was captured from the left eye perspective at the first time rather than the left image sensor perspective at the first time, e.g., to appear as the first view 401. In various implementations, the transformation is a projective transformation. In various implementations, the HMD 320 transforms the first image 402 based on depth values associated with the first image 402 and a difference between the left image sensor perspective at the first time and the left eye perspective at the first time. In various implementations, the depth value for a pixel of the first image 402 represents the distance from the left image sensor 321a to an object in the physical environment 300 represented by the pixel. In various implementations, the difference between the left image sensor perspective at the first time and the left eye perspective at the first time is determined during a calibration procedure.

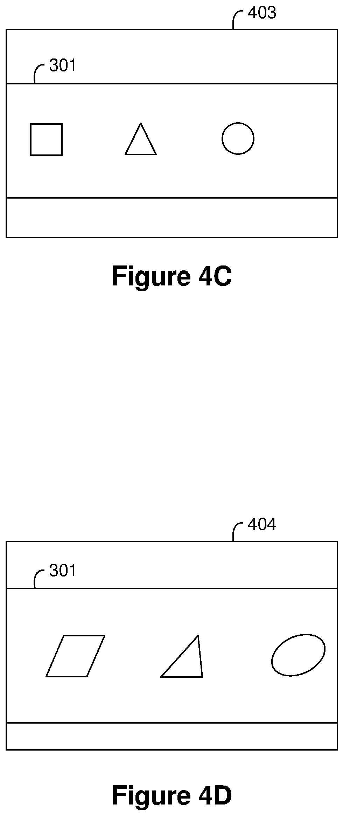

Figure 4C illustrates a second view 403 of the physical environment 300 at a second time as would be seen by the left eye 311a if the user 310 were not wearing the HMD 320. Between the first time and the second time, the user 310 has moved and/or rotated the head of the user 310 to the right. Accordingly, in the second view 403, the square, the triangle, and the circle can be seen on the structure 301 at locations to the left of the corresponding locations of the square, the triangle, and the circle in the first view 401.

In various implementations, transforming the first image 402 takes time. Accordingly, when the first image 402 is transformed to appear as the first view 401 and displayed on the left eye display 331a at the second time, the transformed first image 402 does not correspond to what the user 310 would see if the HMD 320 were not present, e.g., the second view 403.

Accordingly, in various implementations, the HMD 320 transforms the first image 402 to make it appear as though it was captured from the left eye perspective at the second time rather than the left image sensor perspective at the first time, e.g., to appear as the second view 403. In various implementations, the HMD 320 transforms the first image 402 based on depth values associated with first image 402 and a difference between the left image sensor perspective at the first time and the left eye perspective at the second time. As noted above, in various implementations, the difference between the left image sensor perspective at the first time and the left eye perspective at the first time is determined during a calibration procedure. Further, the difference between the left eye perspective at the first time and the left eye perspective at the second time can be determined based on predicting the change in pose of the HMD 320 between the first time and the second time. In various implementations, the change in pose is predicted based on the motion of the HMD 320 at the first time, such as the speed and/or acceleration, rotationally and/or translationally. From these two differences, the difference between the left image sensor perspective at the first time and the right eye perspective at the second time can be determined.

In various implementations, the left image sensor 321a is a rolling-shutter camera. Thus, in various implementations, the left image sensor 321a captures an image over a capture time period. For example, in various implementations, each line of the left image sensor 321a is exposed over a different exposure time period have an exposure time period length and, following the exposure time period, the resulting values are read out over a corresponding readout time period having a readout time period length. The exposure time period for each line after the first line begins a readout time period length after the exposure time period for the previous line begins.

Figure 4D illustrates a second image 404 of the physical environment 300 captured by the left image sensor 321a over a capture time period including the first time. Because the left image sensor 321a is to the left of the left eye 311a, the triangle and the circle on the structure 301 in the second image 404 are at locations to the right of the corresponding locations of the triangle and the circle in the first view 401. Further, because the left image sensor 321a is closer to the structure 301 than the left eye 311a, the square, the triangle, and the circle are larger in the second image 404 than in the first view 401. If the user 310 did not move during the capture time period, the second image 404 would appear identical to the first image 402. However, because the user 310 did move during the capture time period, in the second image 404, as compared to the first image 402, the square, the triangle, and the circle seen on the structure 301 are skewed.

In various implementations, the HMD 320 transforms the second image 404 to make it appear as though it was captured from the left eye perspective at the second time rather than the left image sensor perspective over the capture time period including the first time, e.g., to appear as the second view 403. In various implementations, the HMD 320 transforms the second image 404 based on depth values associated with second image 404 and a difference between the left image sensor perspective at the first time and the left eye perspective at the second time. Further, in various implementations, the HMD 320 transforms the second image 404 based on motion of the HMD 320 during the capture time period to compensate for skew introduced by the motion of the HMD 320 during the capture time period.

In various implementations, transforming the second image 404 includes generating a definition of a transform and applying the transform to the second image 404. In various implementations, to reduce latency, the HMD 320 generates the definition of the transform before the second image 404 is captured. In various implementations, the HMD 320 generates the definition of the transform based on a predicted pose of the HMD 320 at the first time and a predicted pose of the HMD 320 at the second time. In various implementations, the first time is the start of the capture time period. In various implementations, the first time is the end of the capture time period. In various implementations, the first time is the middle of the capture time period, e.g., halfway between the start of the capture time period and the end of the capture time period.

Further, in various implementations, the HMD 320 generates the definition of the transform based on a predicted motion of the HMD 320 during the capture time period to compensate for skew introduced by motion of the HMD 320 during the capture time period.

In various implementations, the left eye display 331a is a rolling display. Thus, in various implementations, the left eye display 331a displays a transformed image over a display time period. For example, in various implementations, each line of the transformed image is emitted at a different emission time period having an emission time period length and, following the emission time period, the line persists over a corresponding persistence time period having a persistence time period length. The emission time period for each line after the first line begins an emission time period length after the emission time period for the previous line begins.

If a user is moving during the display time period, the rolling display creates perceived skews even when the HMD 320 compensates for all the skew introduced by the rolling-shutter camera. In various implementations, the HMD 320 transforms the second image 404 to make it appear as what would be perceived by the moving user 310 from the left eye perspective during a display time period including the second time rather than the left image sensor perspective over the capture time period including the first time. In various implementations, the HMD 320 transforms the second image 404 based on depth values associated with second image 404 and a difference between the left image sensor perspective at the first time and the left eye perspective at the second time. Further, in various implementations, the HMD 320 transforms the second image 404 based on motion of the HMD 320 during the capture time period to compensate for skew introduced by the motion of the HMD 320 during the capture time period. Further, in various implementations, the HMD 320 transforms the second image 404 based on motion of the HMD 320 during the display time period to compensate for perceived skew introduced by the motion of the HMD 320 during the display time period. Thus, in various implementations, the HMD 320 generates the transform based on a predicted motion of the HMD 320 during the display time period to compensate for perceived skew introduced by motion of the HMD 320 during the display time period.

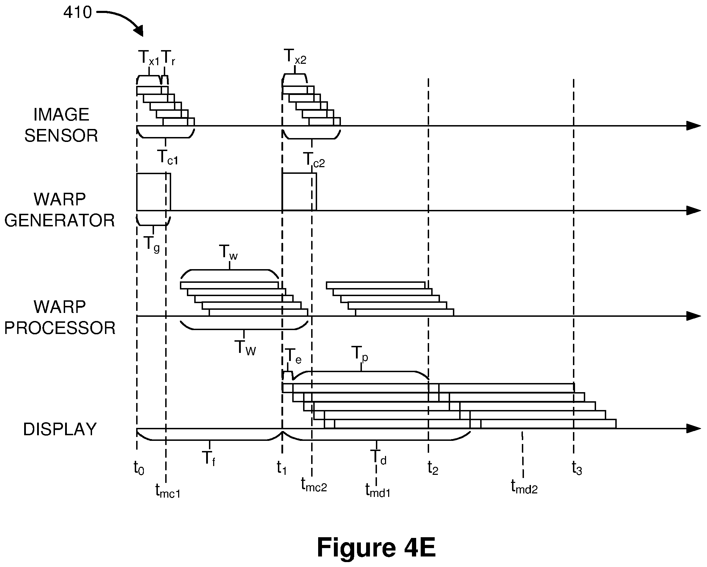

Figure 4E illustrates a timing diagram for a device according to various implementations. Time is partitioned into a plurality of frames, each having a frame time period length, *T_{f}.* During a first frame (from *t₀* to *t₁*=*t₀*+*T_{f}*), an image sensor captures a first image over a first capture time period having a first capture time period length, *T_{c1}* (from *t₀* to *t₀*+*T_{c1}*)*.* As described above, in various implementations, the image sensor is a rolling-shutter camera. For example, in various implementations, each of *n* lines (of which 5 are illustrated in Figure 4E) of the image sensor is exposed over a different exposure time period having a first exposure time period length, *Tₓ₁,* and, following the exposure time period, the resulting values are read out over a corresponding readout time period having a readout time period length, *Tᵣ*. The exposure time period for each line after the first line begins a readout time period length, *Tᵣ*, after the exposure time period for the previous line begins.

During the first frame, a warp generator generates, over a first warp generation time period having a warp generation time period length, *T_{g}* (from *t₀* to *t₀*+*T_{g}*), a first warp definition based on a predicted pose of the device at the first capture time (during the first frame) and a predicted pose of the device at a first display time (during the second frame). Further, beginning in the first frame, after a number of lines of the first image have been read out, a warp processor generates, using the first warp definition, a first warped image over a first warp processing time period having a warp processing time period length, *T_{W}.* In various implementations, each line is warped over a different line warp processing time period having a line warp processing time period length, *T_{w}*. The line warp processing time period for each line after the first line begins a readout time period length, *Tᵣ*, after the line warp processing time period for the previous line begins.

During a second frame, a display initiates display of the first warped image over a first display time period having a display time period length, *T_{d}* (from *t₁* to *t₁*+*T_{d}*)*.* In various implementations, the display is a rolling display. For example, in various implementations, each of *m* lines (of which 5 are illustrated in Figure 4E) of the first warped image is emitted at a different emission time period having an emission time period length, *Tₑ*, and, following the emission time period, the line persists over a corresponding persistence time period having a persistence time period length, *Tₚ.* The emission time period for each line after the first line begins an emission time period length, *Tₚ,* after the emission time period for the previous line begins. Notably, because the display is a rolling display, the display time period length, *T_{d},* is longer than the frame time period length, *T_{f}.* However, each line is displayed for a frame period length, *T_{f}.*

As noted above, during the first frame, the warp generator generates a warp definition based on a predicted pose of the device at a first capture time and a predicted pose of the device at a first display time. In various implementations, the first capture time is a middle of the first capture time period (e.g., *t_{mc1}*=*t₀*+*T_{c1}*/2=*t₀*+(*Tₓ₁*+*nTᵣ*)/2)*.* In various implementations, the first display time is a middle of the first display time period (e.g., *t_{md1}*=*t₁*+*T_{d}*/2=*t₁*+(*Tₚ*+*mTₑ*)/2)*.*

During the second frame (from *t₁* to *t₂*=*t₁*+*T_{f}*)*,* the image sensor captures a second image over a second capture time period having a second capture time period length, *T_{c2}* (from *t₁* to *t₁*+*T_{c2}*)*.* In various implementations, the second capture time period length, *T_{c2},* is longer or shorter than the first capture time period length, *T_{c1},* due to a longer or shorter second exposure time period length, *Tₓ₂.*

During the second frame, a warp generator generates, over a second warp generation time period having the warp generation time period length, *T_{g}* (from *t₁* to *t₁*+*T_{g}*), a second warp definition based on a predicted pose of the device at a second capture time (during the second frame) and a predicted pose of the device at a second display time (during the third frame). Further, beginning in the second frame, after a number of lines of the second image have been read out, the warp processor generates, using the second warp definition, a second warped image over a second warp processing time period having a warp processing time period length, *T_{W}.*

During a third frame, a display initiates display of the second warped image over a second display time period having a display time period length, *T_{d}* (from *t₂* to *t₂*+*T_{d}*).

As noted above, during the second frame, the warp generator generates a second warp definition based on a predicted pose of the device at a second capture time and a predicted pose of the device at a second display time. In various implementations, the first capture time is a middle of the second capture time period (e.g., *t_{mc2}*=*t₁*+*T_{c2}*/2=*t₁*+(*Tₓ₂*+*nTᵣ*)/2)*.* In various implementations, the second display time is a second of the first display time period (e.g., *t_{md2}*=*t₂*+*T_{d}*/2=*t₂*+(*Tₚ*+*mTₑ*)/2)*.*

Although Figure 4E illustrates some processing that may be applied to the images, in various implementations, additional processing is performed such as debayering, color correction, lens distortion correction, and/or the addition of virtual content.

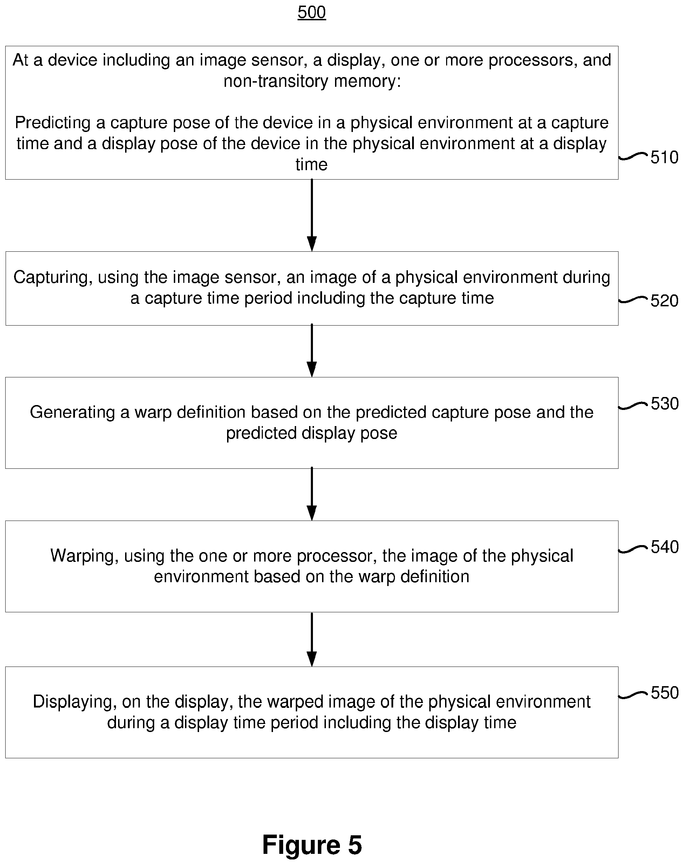

Figure 5 is a flowchart representation of a method of warping an image in accordance with some implementations. In various implementations, the method 500 is performed by a device with an image sensor, a display, one or more processors, and non-transitory memory (e.g., the electronic device 120 of Figure 1). In some implementations, the method 500 is performed by processing logic, including hardware, firmware, software, or a combination thereof. In some implementations, the method 500 is performed by a processor executing instructions (e.g., code) stored in a non-transitory computer-readable medium (e.g., a memory).

The method 500 begins, in block 510, with the device predicting a capture pose of the device in a physical environment at a capture time and a display pose of the device at a display time. As a prediction, in various implementations, predicting the capture pose is performed before the capture time period. Similarly, in various implementations, predicting the display pose is performed before the display time period. Further, in various implementations, predicting the display pose is performed before the capture time period.

In various implementations, the device predicts the capture pose and/or the device pose with a pose prediction module which takes, as an input, a time and returns, as an output, a predicted pose of the device at that time. In various implementations, the pose prediction module further returns a predicted motion of the device at the time. In various implementations, the predicted motion includes a 3DOF rotational speed. In various implementations, the predicted motion includes a 6DOF rotational and translational speed. In various implementations, the predicted motion includes a 3DOF or 6DOF acceleration.

In various implementations, the pose prediction module predicts the capture pose and/or the display pose based on current and/or historical data received from an inertial measurement unit (IMU). Thus, in various implementations, predicting the capture pose and/or the display pose is based on prior motion of the device, such as a rotational and/or translational speed and/or acceleration. For example, prior motion of the device can be extrapolated to determine the pose at future times. In various implementations, the pose prediction module predicts the capture pose and/or the display pose based on content displayed on the display. Thus, in various implementations, predicting the capture pose and/or the display pose is based on content displayed on the display. For example, in various implementations, certain content displayed towards an edge of the display may draw a user's attention causing the user to turn the user's head towards the content.

The method 500 continues, in block 520, with the device capturing, using the image sensor, an image of the physical environment during a capture time period including the capture time. In various implementations, predicting the capture pose (in block 510) includes determining the capture time. In various implementations, the device determines the capture time by determining the middle of the capture time period. In various implementations, the device determines the capture time as a time within the center half of the capture time period. In various implementations, the device determines the capture time as the start of the capture time period. In various implementations, the device determines the capture time as the end of the capture time period.

In various implementations, the device determines the capture time based on a prediction confidence. For example, if the prediction confidence degrades at later times, e.g., due to high velocity, high acceleration, high jerk/jounce, or inconsistent combinations of velocity and acceleration, the device may determine the capture time as a time earlier in the capture time period. As another example, if the prediction confidence improves at later times, e.g., due to content expected to draw the user into a particular pose, the device may determine the capture time as a time later in the capture time period.

In various implementations, the image sensor is a rolling-shutter camera. Each line of the image sensor is exposed during a respective exposure time period having an exposure time period length and the resulting values are read out during a respective readout time period having a readout time length. The exposure time period for each line subsequent to the first line begins a readout time period length after the exposure time period for the previous line begins. The exposure time period length may vary due to an auto-exposure algorithm compensating for different ambient light characteristics, foreground-background luminosity balance, etc. However, based on data indicating the exposure time period length, the device can determine the length of the capture time period as *E*+*N*^{∗}*R,* wherein E is the exposure time period length, *N* is the number of lines of the image sensor, and R is the readout time period length. Further, based on a timestamp (*t₀*) indicating the start of the capture time period, the device can determine the capture time (*t_{c}*) as the middle of the capture time period, e.g., *t_{c}*=*tₒ*+(1/2)(*E*+*N^{∗}R*)*.* In various implementations, the device provides the capture time to the pose prediction module to obtain the predicted capture pose.

The method 500 continues, in block 530, with the device generating a warp definition based on the predicted capture pose and the predicted display pose. The warp definition defines a mapping between a two-dimensional unwarped space of the image and a two-dimensional warped space of the warped image. In various implementations, the warp definition includes a warp mesh.

In various implementations, the warp definition, when applied, compensates for a difference in perspective between the image sensor and an eye of a user. Accordingly, in various implementations, the warp definition, when applied, reprojects the image from a first perspective of the image sensor to a second perspective. In various implementations, the second perspective is the perspective of a user, e.g., the perspective of an eye of the user. In various implementations, the second perspective is a perspective of a location closer to the eye of the user in one or more dimensions of a three-dimensional coordinate system of the device.

To that end, in various implementations, the warp definition is further based on a depth map including a plurality of depths respectively associated with a plurality of pixels of the image of the physical environment. In various implementations, the device obtains the plurality of depths from a depth sensor. In various implementations, the device obtains the plurality of depths using stereo matching, e.g., using the image of the physical environment as captured by a left image sensor and another image of the physical environment captured by a right image sensor.

In various implementations, the device obtains the plurality of depths from a three-dimensional scene model of the physical environment, e.g., via rasterization of the three-dimensional model or ray tracing based on the three-dimensional model. In various implementations, the device determines the depth map using the three-dimensional model based on the predicted capture pose. In various implementations, the device determines the depth map before the capture time period. Similarly, in various implementations, the device generates the warp definition before the capture time period.

In various implementations, the warp definition, when applied, compensates for distortions, such as skew, introduced by motion of the device during the capture time period. Accordingly, in various implementations, the warp definition is further based on a predicted motion of the device during the capture time period, e.g., at least at the capture time.

In various implementations, the warp definition, when applied, compensates for perceived distortions, such as perceived skew, introduced by motion of the device during the display time period. Accordingly, in various implementations, the warp definition is further based on a predicted motion of the device during the display time period, e.g., at least at the display time.

In various implementations, the warp definition, when applied, compensates for other distortions, such as distortion caused by a lens of the image sensor, distortion caused by a lens of the display, distortion caused by foveation, distortion caused by compression, etc.

The method 500 continues, in block 540, with the device warping, using the one or more processors, the image of the physical environment based on the warp definition.

The method 500 continues, in block 550, with the device displaying, on the display, the warped image of the physical environment during a display time period including the display time. In various implementations, predicting the display pose (in block 510) includes determining the display time. In various implementations, the device determines the display time by determining the middle of the display time period. In various implementations, the device determines the display time as a time within the center half of the display time period. In various implementations, the device determines the display time as the start of the display time period. In various implementations, the device determines the display time as the end of the display time period.

In various implementations, the device determines the display time based on a prediction confidence. For example, if the prediction confidence degrades at later times, e.g., due to high velocity, high acceleration, high jerk/jounce, or inconsistent combinations of velocity and acceleration, the device may determine the display time as a time earlier in the display time period. As another example, if the prediction confidence improves at later times, e.g., due to content expected to draw the user into a particular pose, the device may determine the display time as a time later in the display time period.

In various implementations, the display is a rolling display. Each line of the display is emitted during a respective emission time period having an emission time period length and the resulting values persist on the display for a respective persistence time period having a persistence time length. The emission time period for each line subsequent to the first line begins an emission time period length after the emission time period for the previous line begins. Thus, the device can determine the length of the display time period as *P*+*N^{∗}T,* wherein *T* is the emission time period length, *N* is the number of lines of the display, and *P* is the persistence time period length. Further, based on a timestamp (*t₀*) indicating the start of the display time period, the device can determine the display time (*t_{d}*) as the middle of the display time period, e.g., *t_{d}*=*tₒ*+(1/2)(*P*+*N*^{∗}*T*)*.* In various implementations, the device provides the display time to the pose prediction module to obtain the predicted display pose.

Thus, in various implementations, the device warps the image to compensate for distortions caused by motion (or predicted motion) of the device during a frame time period, wherein the frame time period extends from a start of the capture time period to an end of the display time period.

In various implementations, the warped image includes XR content. In some implementations, XR content is added to the image of the physical environment before the warping (at block 540). In some implementations, XR content is added to the warped image of the physical environment. In various implementations, the XR content is warped according to the warp definition before being added to the warped image of the physical environment. In various implementations, different sets of XR content are added to the image of the environment before the warping and after the warping. For example, in various implementations, world-locked content is added to the image of the environment and display-locked content is added to the warped image of the environment.

Figure 6 is a block diagram of an example of the controller 110 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the controller 110 includes one or more processing units 602 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 606, one or more communication interfaces 608 (e.g., universal serial bus (USB), FIREWIRE, THUNDERBOLT, IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 610, a memory 620, and one or more communication buses 604 for interconnecting these and various other components.

In some implementations, the one or more communication buses 604 include circuitry that interconnects and controls communications between system components. In some implementations, the one or more I/O devices 606 include at least one of a keyboard, a mouse, a touchpad, a joystick, one or more microphones, one or more speakers, one or more image sensors, one or more displays, and/or the like.

The memory 620 includes high-speed random-access memory, such as dynamic random-access memory (DRAM), static random-access memory (SRAM), double-data-rate random-access memory (DDR RAM), or other random-access solid-state memory devices. In some implementations, the memory 620 includes non-volatile memory, such as one or more magnetic disk storage devices, optical disk storage devices, flash memory devices, or other non-volatile solid-state storage devices. The memory 620 optionally includes one or more storage devices remotely located from the one or more processing units 602. The memory 620 comprises a non-transitory computer readable storage medium. In some implementations, the memory 620 or the non-transitory computer readable storage medium of the memory 620 stores the following programs, modules and data structures, or a subset thereof including an optional operating system 630 and an XR experience module 640.

The operating system 630 includes procedures for handling various basic system services and for performing hardware dependent tasks. In some implementations, the XR experience module 640 is configured to manage and coordinate one or more XR experiences for one or more users (e.g., a single XR experience for one or more users, or multiple XR experiences for respective groups of one or more users). To that end, in various implementations, the XR experience module 640 includes a data obtaining unit 642, a tracking unit 644, a coordination unit 646, and a data transmitting unit 648.

In some implementations, the data obtaining unit 642 is configured to obtain data (e.g., presentation data, interaction data, sensor data, location data, etc.) from at least the electronic device 120 of Figure 1. To that end, in various implementations, the data obtaining unit 642 includes instructions and/or logic therefor, and heuristics and metadata therefor.

In some implementations, the tracking unit 644 is configured to map the physical environment 105 and to track the position/location of at least the electronic device 120 with respect to the physical environment 105 of Figure 1. To that end, in various implementations, the tracking unit 644 includes instructions and/or logic therefor, and heuristics and metadata therefor.

In some implementations, the coordination unit 646 is configured to manage and coordinate the XR experience presented to the user by the electronic device 120. To that end, in various implementations, the coordination unit 646 includes instructions and/or logic therefor, and heuristics and metadata therefor.

In some implementations, the data transmitting unit 648 is configured to transmit data (e.g., presentation data, location data, etc.) to at least the electronic device 120. To that end, in various implementations, the data transmitting unit 648 includes instructions and/or logic therefor, and heuristics and metadata therefor.

Although the data obtaining unit 642, the tracking unit 644, the coordination unit 646, and the data transmitting unit 648 are shown as residing on a single device (e.g., the controller 110), it should be understood that in other implementations, any combination of the data obtaining unit 642, the tracking unit 644, the coordination unit 646, and the data transmitting unit 648 may be located in separate computing devices.

Moreover, Figure 6 is intended more as functional description of the various features that may be present in a particular implementation as opposed to a structural schematic of the implementations described herein. As recognized by those of ordinary skill in the art, items shown separately could be combined and some items could be separated. For example, some functional modules shown separately in Figure 6 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

Figure 7 is a block diagram of an example of the electronic device 120 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the electronic device 120 includes one or more processing units 702 (e.g., microprocessors, ASICs, FPGAs, GPUs, CPUs, processing cores, and/or the like), one or more input/output (I/O) devices and sensors 706, one or more communication interfaces 708 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 710, one or more XR displays 712, one or more optional interior- and/or exterior-facing image sensors 714, a memory 720, and one or more communication buses 704 for interconnecting these and various other components.

In some implementations, the one or more communication buses 704 include circuitry that interconnects and controls communications between system components. In some implementations, the one or more I/O devices and sensors 706 include at least one of an inertial measurement unit (IMU), an accelerometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more XR displays 712 are configured to provide the XR experience to the user. In some implementations, the one or more XR displays 712 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more XR displays 712 correspond to diffractive, reflective, polarized, holographic, etc. waveguide displays. For example, the electronic device 120 includes a single XR display. In another example, the electronic device includes an XR display for each eye of the user. In some implementations, the one or more XR displays 712 are capable of presenting MR and VR content.

In some implementations, the one or more image sensors 714 are configured to obtain image data that corresponds to at least a portion of the face of the user that includes the eyes of the user (any may be referred to as an eye-tracking camera). In some implementations, the one or more image sensors 714 are configured to be forward-facing so as to obtain image data that corresponds to the physical environment as would be viewed by the user if the electronic device 120 was not present (and may be referred to as a scene camera). The one or more optional image sensors 714 can include one or more RGB cameras (e.g., with a complimentary metal-oxide-semiconductor (CMOS) image sensor or a charge-coupled device (CCD) image sensor), one or more infrared (IR) cameras, one or more event-based cameras, and/or the like.

The memory 720 includes high-speed random-access memory, such as DRAM, SRAM, DDR RAM, or other random-access solid-state memory devices. In some implementations, the memory 720 includes non-volatile memory, such as one or more magnetic disk storage devices, optical disk storage devices, flash memory devices, or other non-volatile solid-state storage devices. The memory 720 optionally includes one or more storage devices remotely located from the one or more processing units 702. The memory 720 comprises a non-transitory computer readable storage medium. In some implementations, the memory 720 or the non-transitory computer readable storage medium of the memory 720 stores the following programs, modules and data structures, or a subset thereof including an optional operating system 730 and an XR presentation module 740.

The operating system 730 includes procedures for handling various basic system services and for performing hardware dependent tasks. In some implementations, the XR presentation module 740 is configured to present XR content to the user via the one or more XR displays 712. To that end, in various implementations, the XR presentation module 740 includes a data obtaining unit 742, a perspective transforming unit 744, an XR presenting unit 746, and a data transmitting unit 748.

In some implementations, the data obtaining unit 742 is configured to obtain data (e.g., presentation data, interaction data, sensor data, location data, etc.) from at least the controller 110 of Figure 1. To that end, in various implementations, the data obtaining unit 742 includes instructions and/or logic therefor, and heuristics and metadata therefor.

In some implementations, the perspective transforming unit 744 is configured to perform perspective correction of an image using a predicted capture pose at a capture time of the image and a predicted display pose at a display time of the image. To that end, in various implementations, the perspective transforming unit 744 includes instructions and/or logic therefor, and heuristics and metadata therefor.

In some implementations, the XR presenting unit 746 is configured to display the transformed image via the one or more XR displays 712. To that end, in various implementations, the XR presenting unit 746 includes instructions and/or logic therefor, and heuristics and metadata therefor.

In some implementations, the data transmitting unit 748 is configured to transmit data (e.g., presentation data, location data, etc.) to at least the controller 110. In some implementations, the data transmitting unit 748 is configured to transmit authentication credentials to the electronic device. To that end, in various implementations, the data transmitting unit 748 includes instructions and/or logic therefor, and heuristics and metadata therefor.

Although the data obtaining unit 742, the perspective transforming unit 744, the XR presenting unit 746, and the data transmitting unit 748 are shown as residing on a single device (e.g., the electronic device 120), it should be understood that in other implementations, any combination of the data obtaining unit 742, the perspective transforming unit 744, the XR presenting unit 746, and the data transmitting unit 748 may be located in separate computing devices.

Moreover, Figure 7 is intended more as a functional description of the various features that could be present in a particular implementation as opposed to a structural schematic of the implementations described herein. As recognized by those of ordinary skill in the art, items shown separately could be combined and some items could be separated. For example, some functional modules shown separately in Figure 7 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Exemplary embodiments of the present disclosure are set out in the following items:
1. A method comprising:
   at a device including an image sensor, a display, one or more processors, and non-transitory memory:
   predicting a capture pose of the device in a physical environment at a capture time and a display pose of the device in the physical environment at a display time;
   capturing, using the image sensor, an image of the physical environment during a capture time period including the capture time;
   generating a warp definition based on the predicted capture pose and the predicted display pose;
   warping, using the one or more processors, the image of the physical environment based on the warp definition; and
   displaying, on the display, the warped image of the physical environment during a display time period including the display time.
2. The method of item 1, wherein predicting the capture pose is performed before the capture time period.
3. The method of item 1 or 2, wherein predicting the display pose is performed before the display time period.
4. The method of item 3, wherein predicting the display pose is performed before the capture time period.
5. The method of any of items 1-4, wherein predicting the capture pose and/or the display pose is based on prior motion of the device.
6. The method of any of items 1-5, wherein predicting the capture pose and/or the display pose is based on content displayed on the display.
7. The method of any of items 1-6, wherein predicting the capture pose includes determining the capture time.
8. The method of item 7, wherein determining the capture time includes determining the middle of the capture time period.
9. The method of item 7 or 8, wherein determining the capture time is based on a prediction confidence.
10. The method of any of items 1-9, wherein predicting the display pose includes determining the display time.
11. The method of item 10, wherein determining the display time includes determining the middle of the display time period.
12. The method of item 10 or 11, wherein determining the display time is based on a prediction confidence.
13. The method of any of items 1-12, wherein the warp definition includes a warp mesh.
14. The method of any of items 1-13, wherein the generating the warp definition is performed prior to the capture time period.
15. The method of any of items 1-14, wherein the warp definition is further based on a depth map including a plurality of depths respectively associated with a plurality of pixels of the image of the physical environment.
16. The method of any of items 1-15, wherein the warp definition is further based on a predicted motion of the device during the capture time period.
17. The method of any of items 1-16, wherein the warp definition is further based on a predicted motion of the device during the display time period.
18. A device comprising:
   an image sensor;
   a display;
   a non-transitory memory; and
   one or more processors to:
      predict a capture pose of the device in a physical environment at a capture time and a display pose of the device in the physical environment at a display time;
      capture, using the image sensor, an image of the physical environment during a capture time period including the capture time;
      warp, using the one or more processors, the image of the physical environment based on the predicted capture pose and the predicted display pose; and
      display, on the display, the warped image of the physical environment during a display time period including the display time.
19. A non-transitory computer-readable memory having instructions encoded thereon which, when executed by one or more processors of a device including an image sensor and a display, cause the device to:
   predict a capture pose of the device in a physical environment at a capture time and a display pose of the device in the physical environment at a display time;
   capture, using the image sensor, an image of the physical environment during a capture time period including the capture time;
   warp, using the one or more processors, the image of the physical environment to compensate for distortion caused by predicted motion of the device during a frame time period; and
   display, on the display, the warped image of the physical environment during a display time period including the display time, wherein the frame time period extends from a start of the capture time period to an end of the display time period.
20. A device comprising:
   an image sensor;
   a display;
   one or more processors;
   non-transitory memory; and
   one or more programs stored in the non-transitory memory, which, when executed by the one or more processors, cause the device to perform any of the methods of items 1-17.
21. A non-transitory memory storing one or more programs, which, when executed by one or more processors of a device including an image sensor and a display, cause the device to perform any of the methods of items 1-17.
22. A device comprising:
   an image sensor;
   a display;
   one or more processors;
   a non-transitory memory; and
   means for causing the device to perform any of the methods of items 1-17.

## Claims

1. A method comprising:
at a device including an image sensor, a display, one or more processors, and non-transitory memory:
predicting a capture pose of the device in a physical environment at a capture time and a display pose of the device in the physical environment at a display time;
capturing, using the image sensor, an image of the physical environment during a capture time period including the capture time;
generating a warp definition based on the predicted capture pose and the predicted display pose;
warping, using the one or more processors, the image of the physical environment based on the warp definition; and
displaying, on the display, the warped image of the physical environment during a display time period including the display time.

2. The method of claim 1, wherein predicting the capture pose is performed before the capture time period.

3. The method of any of claims 1-2, wherein predicting the display pose is performed before the display time period.

4. The method of claim 3, wherein predicting the display pose is performed before the capture time period.

5. The method of any of claims 1-4, wherein predicting the capture pose and/or the display pose is based on prior motion of the device.

6. The method of any of claims 1-5, wherein predicting the capture pose and/or the display pose is based on content displayed on the display.

7. The method of any of claims 1-6, wherein predicting the capture pose includes determining the capture time.

8. The method of claim 7, wherein determining the capture time includes determining the middle of the capture time period.

9. The method of any of claims 7-8, wherein determining the capture time is based on a prediction confidence.

10. The method of any of claims 1-9, wherein the generating the warp definition is performed prior to the capture time period.

11. The method of any of claims 1-10, wherein the warp definition is further based on a depth map including a plurality of depths respectively associated with a plurality of pixels of the image of the physical environment.

12. The method of any of claims 1-11, wherein the warp definition is further based on a predicted motion of the device during the capture time period.

13. The method of any of claims 1-12, wherein the warp definition is further based on a predicted motion of the device during the display time period.

14. A device comprising:
an image sensor;
a display;
a non-transitory memory; and
one or more processors to:
predict a capture pose of the device in a physical environment at a capture time and a display pose of the device in the physical environment at a display time;
capture, using the image sensor, an image of the physical environment during a capture time period including the capture time;
warp, using the one or more processors, the image of the physical environment based on the predicted capture pose and the predicted display pose; and
display, on the display, the warped image of the physical environment during a display time period including the display time.

15. A non-transitory computer-readable memory having instructions encoded thereon which, when executed by one or more processors of a device including an image sensor and a display, cause the device to:
predict a capture pose of the device in a physical environment at a capture time and a display pose of the device in the physical environment at a display time;
capture, using the image sensor, an image of the physical environment during a capture time period including the capture time;
warp, using the one or more processors, the image of the physical environment to compensate for distortion caused by predicted motion of the device during a frame time period; and
display, on the display, the warped image of the physical environment during a display time period including the display time, wherein the frame time period extends from a start of the capture time period to an end of the display time period.
